# EUROPEAN PATENT APPLICATION

(11) **EP 4 485 795 A1**
(43) Date of publication of application: **01.01.2025**
(21) Application number: 23713177.6
(22) Date of filing: 22.02.2023
(51) Int. Cl.: H02S 20/10, H02S 20/21, H02S 20/23, H02S 20/24, H02S 20/26, H02S 10/40

(54) **SOLAR POWER SYSTEMS**

(30) Priority: 22.02.2022 PT 2022117804
(71) Applicant: CARDOSO, Paulo, 1500-075 Lisboa (PT)
(72) Inventor: CARDOSO, Paulo, 1500-075 Lisboa (PT)
(74) Representative: Liebl, Thomas
(86) International application number: PCT/PT2023/050005
(87) International publication number: WO 2023/163609

(57) **Abstract**

The present invention relates to solar energy systems comprising a solar envelope (1) adapted for conversion of solar radiation into electrical energy and associated with a support structure (2) and to a platform (3) that retains the support structure (2) on the ground, whereby the solar envelope (1) is configured so that maximizes the relation between a solar area (A_{S}) relative to a given implantation area (A_{I}) and minimizes the quantity of material of the support structure (2) associated with said solar envelope (1).

## Description

### Field of the invention

The present invention relates to photovoltaic solar energy systems associated with support platforms so that can be deployed at ground level.

### Prior art

The prior art includes many solutions relating to photovoltaic solar energy dispositions that comprise a support structure supporting an envelope disposition comprising a plurality of solar devices arranged in a given spatial distribution.

As a rule, the solar devices present a planar form and are operatively connected to each other arranged in groups with a spatial distribution, in particular distribution of type regular matrix, whereby the geometric centres of the solar devices define at least one, eventually two straight alignments.

In the case that there are provided two alignments of solar devices, said alignments on their hand define a solar plane that includes at least three, or at least four solar devices.

Generally, known solar energy dispositions present one or two solar planes. Generally, solar planes are planar and intersect in a region proximal of respective perimeter zones.

Documents US 2016/0190974 A1 and US 2021/0135620 A1 disclose solar energy systems of the type of the present invention, comprising a support platform and structure of a solar envelope in the form of a canopy that extends in a single solar plane inclined relative to a horizontal plane or in symmetric inclined planes and, in particular in one solar plane inclined relative to the pavement. As inferable, the solar area formed by the photovoltaic solar panels is bigger than the implantation area thereof.

Document WO 2012/172296 A1 discloses a solar panel apparatus with a plurality of photovoltaic devices that presents a generally convex shape but does not configure a system of the type of the present invention. In particular, elements of triangular shape and shapes of spheric dome type present several disadvantages in terms of production costs and applicability as shadowing elements.

Document WO 2021/253118 A1 discloses solar energy generation systems of the type of the present invention, including solar envelopes with a generally convex shape, but with a relatively low profile so as to provide greater wind resistance and a relatively close disposition to neighbouring systems. In particular, this document discloses solar envelopes including solar panels oriented in at least five different directions, including towards an earth pole and the equator. Moreover, this document discloses solar envelopes relatively small heights and whereby the solar panels are disposed with relatively small inclinations relative to a horizontal plane so that generates relatively little convex shapes and is mute relative to convex shapes of arch type. Moreover, the document discloses solar envelopes substantially opaque to wind, operating for deflection thereof over the exterior of the envelope.

### Description of the invention

The objective of the present invention is to provide solar energy systems comprising a solar envelope adapted for shadowing and conversion of solar radiation into electrical energy, structurally associated with a support structure and configured so that maximizes the solar area generating electrical energy relative to a respective implantation area, and to a given quantity of material of support structure of said solar envelope, including as a result of wind loads, as well as requiring simple and efficient ground deployment means so as to reduce costs.

The objective above is solved according to the present invention by means of the features disclosed by claim 1.

The solar envelope can include mutually opposing solar panels, whereby preferentially at least most thereof are rendered on reciprocal direct sight in the interior space confined by the solar envelope.

According to a first relevant aspect, solar energy systems according to the present invention comprise a solar envelope that presents a general shell shape with a convex portion oriented upwards, and including a plurality of solar panels having an inclination from 0° up to 50° or up to 55°, preferentially up to 40° or up to 45°, particularly preferentially up to 30° or up to 35° relative to the direction of the gravity force, or vertical direction, whereby said solar panels are preferentially provided at least in lateral portions of the solar envelope, so that the capacity to convert incident solar radiation is advantageously enhanced, both in terms of total quantity of solar energy being generated as in terms of less variation of thereof along the day.

The solar envelope further comprises solar panels having an inclination from 0° up to 45°, preferentially up to 40°, particularly preferentially up to 35° relative to a horizontal direction, whereby said solar panels are preferentially provided at least in one top portion of the solar envelope.

The solar envelope presents a plurality of solar panels that present plane bisectors, that is, directions orthogonal to any straight contained in the reference photovoltaic plane of solar panels, that form an angle between 75° and 135° between each other, preferentially between 80° and 130°, particularly preferentially between 85° and 125°.

The solar envelope can present only lateral portions.

The solar envelope presents at least two lateral portions and preferentially at least one top portion.

The solar envelope presents at least two, preferentially at least three, particularly preferentially at least four lateral portions, of which at least two are preferentially mutually opposing, and associated with perimeter extension of top portion and extending downwards from a top plane so that configure at least part of an exterior perimeter of the solar envelope.

The solar envelope presents at least two lateral portions comprising solar panels generally oriented sideways, that is, disposed with an inclination of at least 45° and up to 90° relative to a horizontal plane. This means that, when seen in side elevation, a lateral portion presents a plane bisector of respective solar reference plane with an inclination between -45° and +45° relative to the horizontal plane.

The solar envelope can present a top portion comprising at least one, preferentially a plurality of solar panels generally oriented upwards, that is, disposed with an inclination of at least 0° and up to 50°, preferentially up to 45°, particularly preferentially up to 40°, relative to the horizontal plane. This means that, when seen in side elevation, a top portion presents a plane bisector of respective solar reference plane with an inclination between -45° and +45° relative to the horizontal plane.

The solar envelope can comprise top and lateral portions that extend along different and mutually intersecting respective planes.

The solar envelope can comprise at least one of: a top portion and at least two lateral portions, each of said portions presenting solar panels directed in at least one, preferentially in at least two, particularly preferentially in at least three different directions.

The solar envelope can comprise solar panels directed in at least five or six, preferentially at least seven or eight, particularly preferentially at least nine of ten different and mutually intersecting directions.

The solar envelope can comprise top and lateral portions disposed so that respective solar reference planes are oriented according to at least one of:
- along at least two directions defining a bigger angle of at least 200°;
- along at least two directions defining a bigger angle between 90° and 360°, preferentially between 110° and 340°;
- along at least approximately orthogonal directions.

The solar envelope can present a top portion and/or two lateral portions that extend along respective plane surfaces or that comprise a plurality of solar surfaces of mutually intersecting solar panels, disposed in alternated manner, and so that the respective geometric centres configure a single solar reference plane, or so that configure a convex reference solar shape.

The solar envelope can comprise at least one of:
- lateral portions associated with at least two opposite extensions of the top perimeter, preferentially to all the extensions of the top perimeter, and jointly defining a contour of exterior perimeter including at least one of linear and curved extensions;
- lateral portions at least in the proximity and along at least part of the top perimeter, angled downwards by at least 180°, preferentially at least 200°, particularly preferentially at least 230°, and at most 330°, preferentially at most 280°, relative to the top portion;
- lateral portions that extend along a single plane or a plurality of planes disposed according to at least one of: mutually intersecting, adjacent and so that respective geometric centres configure a single reference plane and/or so that configure a reference convex shape;
- lateral portions that extend so that configure a closed contour of lateral perimeter, preferentially with a geometric shape similar to the one of the contour of top perimeter;
- lateral portions that jointly present a lateral solar area (A_{S2}) that does not exceed ten times, preferentially eight times, particularly preferentially four times the top solar area (A_{S1}) of the top portion.

The solar envelope can present at least one of:
- a top portion defining a contour of top perimeter with at least three, preferentially at least four parcel extensions;
- a top portion that configures a top perimeter at least approximately equal to at least one of the perimeters of lateral portions;
- a top portion that configures a top perimeter of smaller dimension than at least one of the perimeters configured by the lateral portions.

A related objective of the present invention is to provide a solar energy system of simple and efficient construction, including in what regards the shape of the solar envelope.

According to one aspect, the solar envelope presents at least one of: a total area (A_{T}) and a direct solar area (A_{S}), oriented towards the sky dome above, that corresponds to at least two times, preferentially at least three times, particularly preferentially at least four or five times the vertical projection of the solar envelope upon ground level, that is, the implantation area (A_{I}) thereof.

The total area (A_{T}) of the solar envelope is the area delimited by solar panels, and the direct solar area (A_{S}) corresponds to the part of the total area (A_{T}) occupied by solar panels on direct sight of the sky dome.

The solar envelope can present at least one of: total area (A_{T}) and direct solar area (A_{S}) that is at least two times bigger than the sum of the horizontal projections of the direct solar area (A_{S}), and the sum of the horizontal projections of the direct solar area (A_{S}) is equal or bigger than the implantation area (A_{I}) of the solar envelope.

The solar envelope confines a reference volume (V_{R}) corresponding to the minimum volume associated with the total area (A_{T}), whereby the reference volume (V_{R}) is preferentially provided mostly empty and distanced from the ground level.

The solar envelope can present at least one of:
- a relation of solar area (A_{S}) to reference volume (V_{R}) bigger than 1 L⁻¹, preferentially bigger than 1,5 L⁻¹;
- a relation between height and the biggest of the transversal directions of the solar envelope smaller than 5:1, preferentially smaller than 3:1, particularly preferentially smaller than 2:1,
- a relation between height and the biggest of the transversal directions of the solar envelope bigger than 0,3:1, preferentially bigger than 0,7:1, particularly preferentially bigger than 1:1.

The solar envelope can present at least one of:
- at least the top portion, preferentially also lateral portions extend at more than 2,3 m, preferentially more than 2,5 m, particularly preferentially more than 2,7 m above ground level;
- at least the most part, preferentially the totality of the inferior free edge perimeter of the solar area (A_{S}) is provided so that the entire contour of shadow projected by the solar envelope upon the ground level can be observed from any viewpoint hereupon;
- does not include solar panels overlapped in the vertical direction,
- includes solar panels, preferentially a smaller part of the direct solar area (A_{S}), at least partially overlapped along the vertical direction.

The solar envelope can present a shape of type segmented convex shell in at least two regions between the top and lateral portions.

The solar envelope can present one of: a shape of dome type, for example cylindrical, conical, prismatic, a shape of arch type, for example of at least approximately circular, polygonal shape, regular or irregular.

The solar envelope comprises a plurality of solar panels adapted for electrical energy generation, whereby the solar panels are preferentially distributed in a pattern of regular and/or irregular mosaic type, so as to form a direct solar area and at least the most part of the surface of the solar envelope.

The solar envelope presents at least one, preferentially a plurality of solar panels in at least one, preferentially in each one of the top and lateral portions of the solar envelope.

The solar envelope can include a plurality of solar panels, preferentially of similar format, disposed in adjacent manner, preferentially along at least part, or parts, of the solar envelope, but not the total area of solar envelope.

The solar envelope can include only solar panels presenting a format with at least one central symmetry axis, preferentially two central symmetry axes, including of rectangular, pentagonal, or hexagonal format.

The solar envelope can be devoid of solar panels that present a solar surface with at least one of: triangular shape and trapeze shapes without a central symmetry axis.

The solar envelope can include solar panels that present a solar surface with at least one of: a single shape, preferentially rectangular or hexagonal, a single format and characteristic dimension of common solar surface, for example width, so that can be disposed in common support alignments with a similar width.

According to another aspect of the present invention, the solar envelope can present a ventilation area (Aᵥ) distributed by the solar envelope, preferentially along at least most part of, preferentially a whole extension along at least one of: top portions, lateral portions and perimeter regions thereof.

The ventilation area can be provided by a plurality of ventilation parts, so that reduces the wind load upon the solar envelope and support structure thereof.

The solar envelope can be configured so that can be crossed by a non-residual part of the upstream wind flow along at least one of: along a generally crossing direction thereof, and along a generally ascending direction, that is, in at least one of lateral and top portions.

The solar envelope can be configured so that the wind incident thereupon can circulate inwards of the solar envelope along at least two, preferentially at least four different directions, and preferentially can further circulate in an ascending movement through at least a portion top of the solar envelope.

The ventilation area can be provided with at least one of: at least one characteristic dimension 10% bigger than a characteristic dimension of the solar surface of the solar panels, and a porosity to wind of at least 50%, preferentially at least 70%, particularly preferentially at least 80% or 90%.

Said ventilation parts can be provided as at least one of: empty portions of the solar envelope between solar panels and bigger than slot-like spaces, and portions of the solar envelope occupied by porous elements, for example in the form of panels, that delimit an area that is at least partially open or perforated to provide a wind porosity of at least 50%.

The solar envelope can present a plurality of ventilation parts distributed according to at least one of:
- in extensions of linear shape along a region between top and lateral portions, preferentially along at least most part of the perimeter between top and lateral portions;
- in extensions of linear shape along at least one of: at least most part of a vertical extension, preferentially at least between concomitant lateral portions, and at least most part of a non-vertical extension, preferentially between opposite sides of at least one of top and lateral portions;
- in extensions of linear shape along a region between successive solar panels;
- in at least two portions, preferentially in at least four portions of the solar envelope.

It is preferred when the difference between the total area (A_{T}) and direct solar area (A_{S}) corresponds to wind porous portions of the total exterior surface configured by the solar envelope, that is, portions that provide wind circulation across de solar envelope, notably between exterior and interior sides and/or underneath and above the reference volume (V_{R}) defined by the solar envelope.

The solar envelope can present a total area (A_{T}) that is at least 5%, preferentially at least 10% and at most 40%, preferentially 30% bigger than the direct solar area (A_{S}).

The solar area (A_{S}) is at least four times, preferentially at least five times bigger than the ventilation area (A_{V}).

The solar envelope can present a ventilation area (A_{V}) corresponding to the total area of ventilation parts and configured so that provides air circulation through the solar envelope, whereby it is advantageous when the ventilation area (A_{V}) is comprised between 5 and 30%, preferentially between 8 and 20%, particularly preferentially between 10 and 15% of the direct solar area (A_{S}).

According to another relevant aspect, solar energy systems according to the present invention comprise a support structure adapted so that can retain the solar envelope in a form and/or position relative to the sky dome, and so that provides better structural efficiency in view of the configuration, relative dimensions and association thereof to a support platform and to the ground.

The support structure can include mutually opposing support alignments, preferentially most thereof rendered on reciprocal direct sight in the interior space confined by the structural support.

According to a first aspect, the support structure comprises at least two types of support alignments jointly configuring mesh cells of a structural mesh, whereby at least part of the mesh cells defines angles between each other comprised between 75° e 135° on the interior side of the structural mesh, so that the support structure presents at least some portions of at least approximately convex shape.

The support structure includes support alignments that configure a three-dimensional structural mesh, preferentially with the shape of convex shell, including so that delimit a plurality of mesh cells of shape and/or dimension regular and/or irregular.

The mesh cells extend along at least part, preferentially most part of the solar envelope, and each defines a plane that extends at least in the proximity and preferentially at least approximately parallel to the solar envelope, whereby it is preferred when the mesh cells only extend in lateral portions to the solar panels, and preferentially not intersecting the projection of the solar surface thereof, so as not to interfere in the exposition thereof to direct or diffuse solar radiation.

According to another aspect, the support structure is configured so that the number of mesh cells in exterior planes of the structural mesh, is smaller than the total number of solar panels of the solar envelope, so that the support structure advantageously presents smaller density of materially distinct divisions than the solar envelope.

The support structure can confine a support area smaller than at least one of: total area (A_{T}) and direct solar area (A_{S}) of the solar envelope.

The support structure can be configured so that provides at least one of: at least two support alignments that extend transversally at the whole height and width of the structural mesh, for example in a generally inverted U format, and two support alignments that extend around the whole perimeter of the solar envelope, in a general closed ring format, whereby the support elements of said support alignments differ in at least one of cross section and linear weight.

The support structure can present at least two diametrically opposite segments of support alignments in at least three alignments of mesh cells in at least one of: along a transversal extension and at different levels of the structural mesh.

The support structure can include support alignments that configure a structural mesh with at least one of: at least four, preferentially at least eight mesh cells diametrically opposed to another, adjacent mesh cells defining an angle smaller than 120°, orthogonal or an acute angle.

The support structure can include at least two similar first support alignments adapted so that can retain solar panels, and at least two support alignments adapted so that can structurally connect the first support alignments.

The support structure can include support alignments disposed in orthogonal planes.

The support structure can extend with continuity of the structural mesh between the top and lateral portions of the solar envelope, preferentially on the interior side of the solar envelope.

The support structure can be configured so that provides at least two, preferentially at least four, particularly preferentially at least six force transmission directions orthogonal to at least one of: to a surface of solar panels and to the direction of the gravity force.

The support structure can be configured so that provides at least one of: a total height of structural mesh and a height above the ground that is at least two times the height of the solar panels in the vertical direction.

The support structure can include a structural mesh with a total height comprised between two and twenty times the extension of solar panels measured along the vertical direction.

The support structure can be configured so that provides at least two force transmission directions orthogonal to at least one of: solar surface of solar panels and gravity force.

The support structure can be configured so that provides at least one of: at least partial vertical overlapping of solar panels and up to three, preferentially up to two alignments of solar panels with a format and in a relative position at least approximately equal.

The support structure can be configured so that provides at least four, preferentially at least eight mesh cells diametrically opposed to another, and mesh cells adjacent defining an angle smaller than 120°, orthogonal or an acute angle.

The support structure can include mesh cells with at least one of: an equivalent shape, an at least approximately equal format, at least one similar dimension.

The support structure can be configured so that provides at least one of: top mesh cells and lateral mesh cells of similar format.

The support structure can be configured so that provides at least one of: mesh cells with at least one dimension different from any of the dimensions of respective photovoltaic module, and at least partial vertical overlapping of mesh cells of the structural mesh.

The support structure can include mesh cells that individually delimit an open area bigger than the solar surface of individual solar panels.

The support structure can comprise a plurality of elongated support elements connected to each other so as to form a structural mesh, whereby the support elements can extend to the interior of the space confined by the support structure, for example in radial manner to a location or plurality of locations, so as to provide structural connection to a respective support platform.

The support elements can present several elements defining a cross section and several elements defining a longitudinal extension of said cross section, for example of truss type, of planar format and/or of prismatic format.

The support elements can present an elongated shape and can be provided in a rigid and recyclable material, including in a metallic material, such as for example steel, in a composite material, such as for example glass or carbon fibre composite.

The support elements can be provided in a biodegradable material, such as for example wood, preferentially together with metallic connections elements or in a composite material.

According to another aspect of the present invention, the solar energy system further comprises a support platform adapted so that can associate a support structure to the ground and/or to a manufactured base, so that the support structure can be deployed at at least one ground and/or pavement level.

The support platform can be configured so that the solar envelope is provided as a shadowing disposition retained by a support structure that is retained on a ground level by the support platform.

The support platform can elevate the support structure above the implantation area so that the shadow of contour of at least the most part, preferentially of the entire, exterior edge of the solar envelope can be projected upon the implantation area and surrounding area thereof.

The support platform can be configured so that the solar envelope and support structure is self-porting or can be supported and/or suspended by the support platform.

The support platform and solar envelope can be adapted so that provide at least one of:
- the solar envelope does not enclose an interior volume relative to the exterior;
- the envelope solar is provided distanced from the implantation area, so that air can circulate through at least two opposite sides of the solar envelope above the implantation area;
- at least two, preferentially all opposite parts of the exterior perimeter of the solar envelope do not extend directly from the implantation area but rather from a level above thereof;
- at least two, preferentially all the opposite parts of the envelope solar present openings for air passage through interior volume.

The platform can include a single platform element or a plurality of platform elements, for example of the type of pole, portico, pavilion, wall, foundation or similar construction.

The platform can include a plurality of elements of elongated format, for example poles, pylons or similar, and adapted so that can be retained on the ground and on the support structure.

The platform can include a plurality of elements adapted so that can be associated with the support structure and provide mobility of the support structure and respective solar envelope.

The platform can include a plurality of elements that are retained on the ground so that operate as foundation.

The platform can include elements that are also part of the support structure of the solar envelope, including in the case of a self-porting structural configuration.

The system can be provided with a general form of type parasol, carport, pavilion, or tunnel.

The system can include a plurality of systems presenting respective solar envelopes, support structures and platforms, distributed in irregular clusters and/or prevailing alignments, for example along a circulation way, and distanced from each other, preferentially in an extension of at least half the height of solar envelope of a solar envelope disposed in the equator direction, to mitigate shadowing effects upon neighboring solar envelopes.

The system can include a plurality of systems presenting respective solar envelopes, support structures and platforms configured so that the solar envelopes extend between different levels above a reference level.

The system can be adapted so that the solar envelope provides at least one of: vehicle circulation underneath, a vertical projection that intersects at least partially or is in the proximity of a vehicle circulation region, such as for example a parking area, a circulation way.

### List of Figures

The present invention shall be hereinafter explained in greater detail based upon preferred embodiments and upon the attached drawings and schematic representations.

The Figures show:
- Figure 1:: planned view of a first embodiment of a solar energy system;
- Figure 2:: planned view of a second embodiment of a solar energy system;
- Figure 3:: perspective view of a third embodiment similar to the one of Figure 2;
- Figure 4:: perspective view of an embodiment including a first embodiment of platform (3);
- Figure 5:: perspective view of an embodiment including a second embodiment of platform (3);
- Figure 6:: perspective view of an embodiment including a third embodiment of platform (3);
- Figure 7:: perspective view of a sixth embodiment;
- Figure 8:: perspective view of a seventh embodiment;
- Figure 9:: perspective view of an eighth embodiment;
- Figure 10:: top view with projection upon a horizontal plane of the eighth embodiment;
- Figure 11:: perspective view of a ninth embodiment;
- Figure 12:: top view with projection upon a horizontal plane of the ninth embodiment;
- Figure 13:: side cut view of a tenth embodiment;
- Figure 14:: side cut view of an eleventh embodiment;
- Figure 15:: perspective view of a twelfth embodiment;
- Figure 16:: perspective view of a thirteenth embodiment;
- Figure 17:: side cut view of a fourteenth embodiment;
- Figure 18:: side cut view of a fifteenth embodiment;
- Figure 19:: front view of a solar energy system in tunnel format, associated with a traffic way;
- Figure 20:: side view of a solar energy system in tunnel format, associated with a traffic way.

### Detailed description of preferred embodiments of the invention

A solar energy system according to the present invention comprises a solar envelope (1) adapted for shadowing an area underneath and for generation of electrical energy by means of solar panels (4), and a support structure (2) presenting a mesh like configuration of convex shape and that retains the solar envelope (1) in a position relative to the sky dome.

The solar envelope (1) presents a plurality of solar panels (4) that delimit a total area (A_{T}) and whose solar surfaces add up to a direct solar area (A_{S}) on sight of the sky dome above, so that the vertical projection of the solar envelope (1) upon a horizontal plane, or upon ground level, defines a respective implantation area (A_{I}).

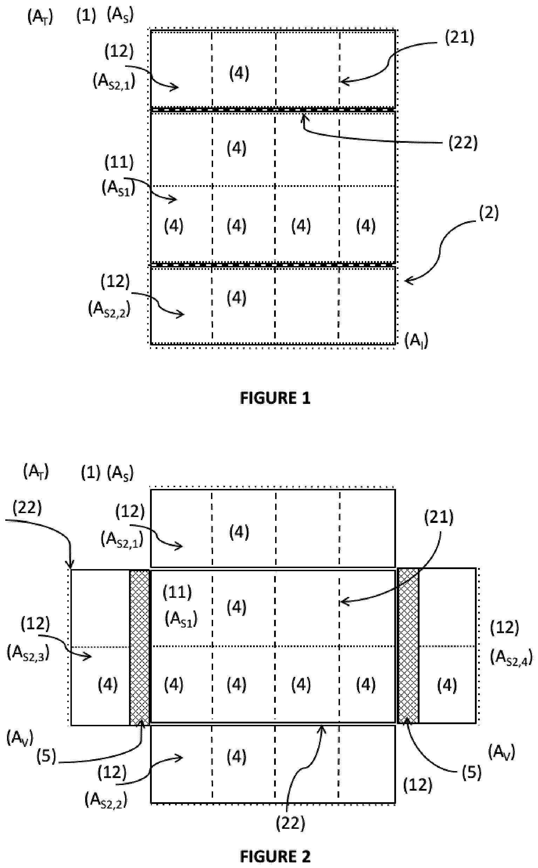

According to one aspect, the shape of the solar envelope (1) is defined such that at least one of the total area (A_{T}) and the direct solar area (A_{S}) are at least twice the implantation area (A_{I}), as schematically illustrated in the embodiments of **Figures 1** and **2**, and further embodiments.

In the case of a first embodiment represented in **Figure 1****,** the solar envelope (1) presents a top portion (11) and two lateral portions (12) extending sideways therefrom so that form an external convex angle relative to the top portion (11) that is bigger than 220°. As can be inferred, the top portion (11) has a solar area (A_{S1}) similar to the implantation area (A_{I}) of the solar envelope (1) and each of the two lateral portions (12) has a solar area (A_{S2,1}, A_{S2,2}) corresponding to at least half the implantation area (A_{I}).

The solar envelope (1) includes a plurality of active solar panels (4) adapted so that generate energy, for example electrical energy, when exposed to direct or indirect solar radiation. The solar panels (4) photovoltaic solar panels that present a single trapezoid format with at least one central symmetry axis, and a single straight or curved planar form. The active solar panels (4) preferentially correspond to at least 70% and at mot 95%, particularly preferentially at least 75% and at most 90% of the total area (A_{T}) of the solar envelope (1).

The solar envelope (1) is associated with a support structure (2) comprising support alignments (21, 22) that configure a three-dimensional structural mesh that extends along the top and lateral portions (11, 12), in this case with successive first support alignments (21) with an arch-like convex shape united to each other by second support alignments (22) in the regions between top and lateral portions (11, 12) and exterior perimeter, thereby configuring support structure (2) with a total of twelve mesh cells that support a total of sixteen solar panels (4).

As represented in **Figure 2**, the solar envelope (1) can present a generally parallelepiped shape with a top portion (11) surrounded by four lateral portions (12). The direct solar area (A_{S}) is in this case approximately 2,5 times bigger than the implantation area (A_{I}), and smaller than the total area (AT) because there are provided ventilation parts (5).

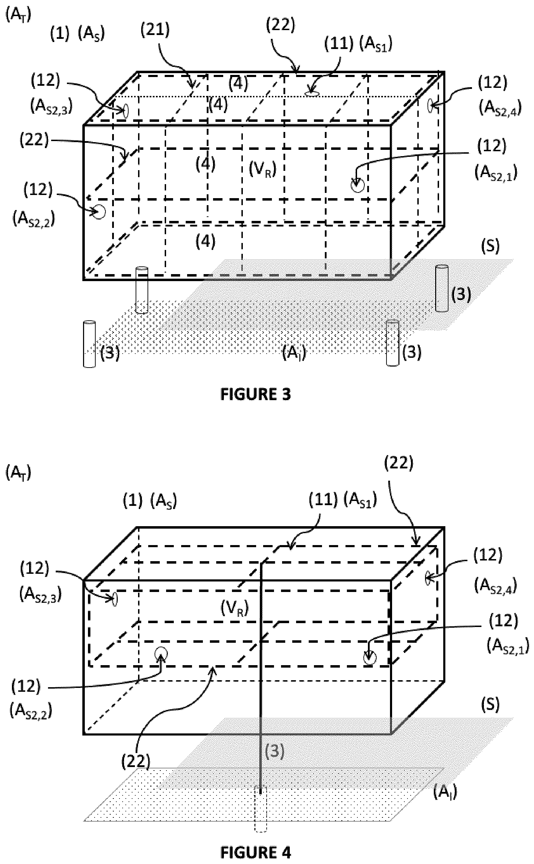

The support structure (2) can comprise a plurality of support alignments including of a first type (21) that includes support elements in a non-horizontal direction and can configure open convex shapes, and of a second type (22) that includes support elements in a non-vertical direction and that can configure closed convex shapes, for example of type closed rings, that extend along the top and lateral portions (11, 12) so that the several support alignments (21, 22) result mutually on sight inside the volume confined by the solar envelope (1), as can also be observed in **Figures 3** and **4****.**

The support structure (2) can present shape of a tree-dimensional mesh comprising a plurality of support alignments of arch type and ring type, so that configures mesh cells in exterior planes of the structural mesh and at least next to the solar envelope (1), whereby the number of mesh cells is smaller than the number of solar panels (4) on the solar envelope (1), as illustrated in the example of Figure 3.

Moreover, and still with reference to Figure 2, the solar envelope (1) can further include ventilation parts (5) configured as non-slot-like spaces that are part of the total area (A_{T}) and provide air circulation between portions of direct solar area (A_{S}), preferentially in a constrained manner and so as to induce a given change in the air flow pattern across de solar envelope (1).

The ventilation parts (5) can be configured so that correspond to portions of the exterior surface of a regular geometry volume of the solar envelope (1) not occupied by the solar panels (4), with respect to a regular volume geometry formed by the solar envelope (1), for example regular parallelepiped or regular pyramid frustum.

The solar envelope (1) can include ventilation parts (5) with at least 30%, preferentially at least 50% wind porosity, for example in the form of panels of lamellae, grid or similar, or corresponding to non-slot-like open spaces between solar panels (4).

In particular, according to another advantageous aspect, the solar envelope (1) can be configured so that the total area (A_{T}) at least approximately corresponds to an integer multiple of the area of the individual solar panels (4), for example a single format of photovoltaic panels, plus the total area of the ventilation parts (5).

It is preferred when the ventilation parts (5) are provided, preferentially only, along at least part of the regions between the top portion (11) and lateral portions (12) and/or between lateral portions (12) .

According to the present invention, the solar envelope (1) and support structure (2) can be configured so that the solar area (A_{S}) is at least twice and a half bigger than the implantation area (A_{I}), whereby embodiments are represented in **Figures 3** to **10****.**

**Figures 3** and **4** represent cases whereby the solar envelope (1) has a solar area (A_{S}) that is at least three times bigger and at least four times bigger, respectively, than its implantation area (A_{I}).

In both cases the solar envelope (1) presents only one top portion (11) and four lateral portions (12) and is associated with a support structure (2) with a tree-dimensional mesh of a cage type, and therefore including a plurality of support alignments, including open shape alignments, for example of arch type, and/or closed shape alignments, for example of a ring type.

In both cases the solar envelope (1) further presents a shape of box type, associated with a support structure (2) with a tree-dimensional mesh of a cage type that is retained stationary by means of a support platform (3) at a height above a usable space, preferentially at least 2 m above thereof, more preferentially at least 2,5 m above thereof, so that the solar envelope (1) can operate as shadowing canopy.

As represented in **Figure 3**, the solar panels (4) can present a single format and be distributed in the form of a regular matrix on the top and lateral portions (11, 12).

It is herewith advantageously provided that solar panels (4) are distributed along a much bigger area relative to an implantation area (A_{I}) of the system, as well as can use a bigger portion of the sky dome around thereof, including of the sky dome in the direction opposite to the prevailing solar direction at a given location.

The support structure (2) is configured as a self-porting structure and mostly solicited by compression force.

The support structure (2) extends on the entire height of the solar envelope (1) in the case of the embodiment of Figure 3, and on only part of the height in the case of Figure 4, so that configures twenty eight mesh cells in the first case, and eight mesh cells in the second case, always a number inferior to the number of solar panels (4) that occupy the direct solar area (AS) on the top and lateral portions (11, 12) in each case.

The support structure (2) can be configured as a self-supporting structure and solicited mostly by compression forces and be associated with a support platform (3) so that the support structure (2) can be retained at a height of at least 2 m above the ground level.

In structural terms, in particular so as to limit the weight of the support structure (2) and greater wind influence thereupon, it is further particularly advantageous when the height of the solar envelope (1) does not exceed ten times, preferentially does not exceed five times the greatest of its extensions orthogonal to the gravity force.

The energy system in this case advantageously corresponds to a compression structure, whereby at least most part of the forces on the support structure (2) are compression forces.

In the case of **Figure 3** and following, the support structure (2) is structurally connected to a support platform (3) that includes a plurality of anchoring elements to the ground, in particular of type foundation on the ground. In general, in following embodiments, the platform (3) can be associated with elements of this type.

The support structure (2) is configured so that can convey the total weight of the solar envelope (1) and support structure (2) to at least one point inside the implantation area (A_{I}), preferentially to a plurality of points or extensions along the exterior perimeter thereof.

It is preferred when the solar envelope (1) is distanced from a base retention level, for example a pavement level, so that there is provided air circulation from around and across the air volume confined by the solar envelope (1). Moreover, the solar envelope (1) is advantageously provided so that the totality of the contour shadow (S) of its exterior perimeter can be projected upon the usable space thereunder.

The solar envelope (1) does not confine a building inside thereof.

In the case of **Figure 4**, the support structure (2) presents only two support alignments of ring type arranged so that the structural mesh does not extend along the entire solar area (AS).

The solar envelope (1) and support structure (2) can be a shadowing canopy, and, together with the support platform (3), can configure a pavilion or similar construction.

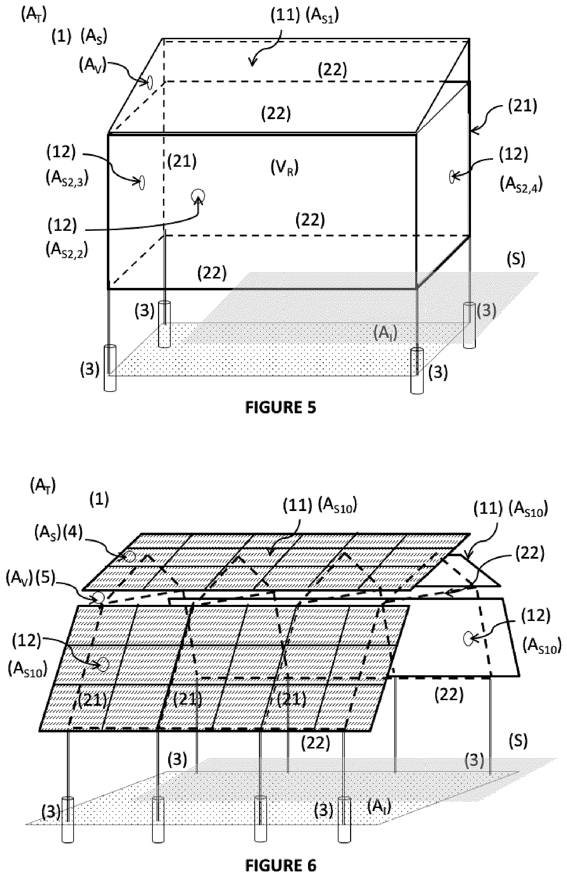

**Figures 5** and **6** represent examples whereby the top portion (11) differs from a single and substantially horizontal reference plane and can present a solar area (A_{S1}) bigger than its implantation area (A_{I}) .

In fact, as represented in **Figure 5**, a single top portion (11) can be provided as an inclined reference plane, preferentially at an angle comprised between 5 and 45°, more preferentially between 10 and 40°, particularly preferentially 15° and 35°, relative to the horizontal plane.

Similarly to the examples of Figures 2 to 4, the solar envelope (1) in this case further presents a convex shape of box type, with four lateral portions (12) of rectangular shape and orthogonal to each other presenting respective lateral portions of solar area e (A_{S2,1}, A_{S2,2}, A_{S2,3} and A_{S2,4}).

According to the invention, and though here not represented, it is noted that the solar envelope (1) extends over the entire surface of the reference volume geometry defined by the solar envelope (1), but the regions of triangular shape of the lateral portions (12) are in this case occupied by ventilation parts (5) and not by solar panels (4), because the later present only a shape of trapezoid type with at least one central symmetry axis.

The support platform (3) in this case presents four support elements disposed in the corner regions of the inferior perimeter of the support structure (2).

In the case of **Figure 6**, the top portion (11) comprises two portions provided as planes inclined relative to a horizontal plane, so that the solar area of the top portion (1) corresponds to the sum of the areas of these two top portions (A_{S1,1}, A_{S1,2}).

According to one aspect of the present invention, the solar envelope (1) can comprise a plurality of envelope parts (10) preferentially of at least approximately equal format, in particular a planar format, generally straight and/or curved, whereby the envelope parts (10) extend along at least one of the extensions of the solar envelope (1), for example along an extension of length and/or an extension of width of at least one of the top and lateral portions (11, 12).

The envelope parts (10) can include a plurality of solar panels (4) and/or ventilation (5) disposed in a matrix-like distribution along at least one direction, preferentially relatively proximal or adjacent to each other, and associated with a respective support structure adapted so that can retain the solar panels together and provides joint handling of the envelope part (10) as an individual piece.

The envelope parts (10) are adapted so that can be associated with open and/or closed support alignments (21, 22), and so that present connection parts adapted so that provide retention thereof on corresponding connection parts of the support structure (2).

The envelope parts (10) are preferentially pre-assembled ex situ for installation in situ, that is, retention on the support structure (2).
it is herewith provided the possibility of configuring different convex shapes of the solar envelope (1) of modular construction with envelope parts (10) of modular format with a smaller number of connections being required in situ. In this sense, it is preferred when said envelope parts (10) comprise a plurality of solar panels and respective structure connecting to each other, and are configured so that present a width between 0,8 and 4 m, preferentially between approximately 1 and 3 m, and a length between 1,5 and 30 m, preferentially between 4,5 and 20 m.

The embodiment of Figure 6 can be configured as a carport, or a pavilion.

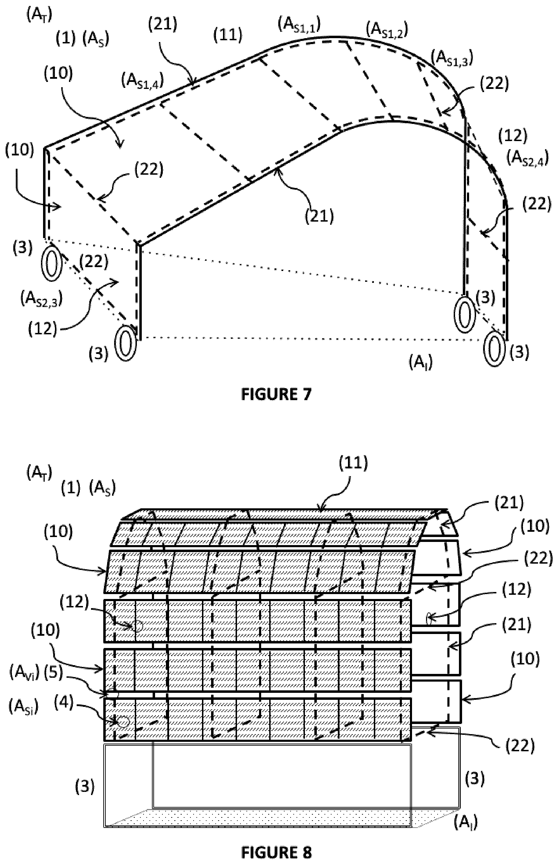

**Figures 7** and **8** represent embodiments of systems whereby the solar envelope (1) includes a plurality of envelope parts (10) of modular format, distributed by the top and lateral portions (11, 12), and disposed along straight and/or curved alignments.

The solar envelope (1) can be configured with lateral portions (12) of planar surface and a top portion (11) including envelope parts (10) disposed in linear alignments so as to configure planar surfaces and in curved alignments so as to generate generally curved surfaces of the solar envelope (1), as represented in **Figure 7****.**

Moreover, according to an advantageous aspect, the solar envelope (1) can include modular envelope parts (10), preferentially of generally trapezoid or hexagonal format, that include respective support structures (2) and a plurality of solar panels (4) and/or ventilation parts (5), whereby said modular envelope parts (10) are adapted so that can be retained one to the other on the top portion (11) and/or lateral portions (12), including by means of previously defined fixations and preferentially univocally corresponding to the relative position of the envelope parts (10) on the envelope solar (1).

The solar envelope (1) can in this case include solar panels (4) in the form of flexible panels that can assume a planar shape or an at least partially curved form.

According to another aspect, the envelope solar (1) can be associated with a platform (3) that includes a plurality of displacement means, including wheels or other. In particular, the solar envelope (1), the support structure (2) and the platform (3) can be designed so that the system can be manually pushed, or moved by motorised means functionally connected to the solar envelope (1).

As represented in **Figure 8**, the solar envelope (1) can present a top portion (11) that comprises a plurality of planar modular solar panels (4) or envelope parts (10), preferentially of a single respective format, disposed along a curved alignment, for example with the form of an arch, and lateral portions (12) that comprise a plurality of planar solar panels (4) or envelope parts (10), preferentially of a single respective format, disposed along a linear alignment, so that configure a surface of planar or curved type, inclined relative to the direction of the gravity force or not.

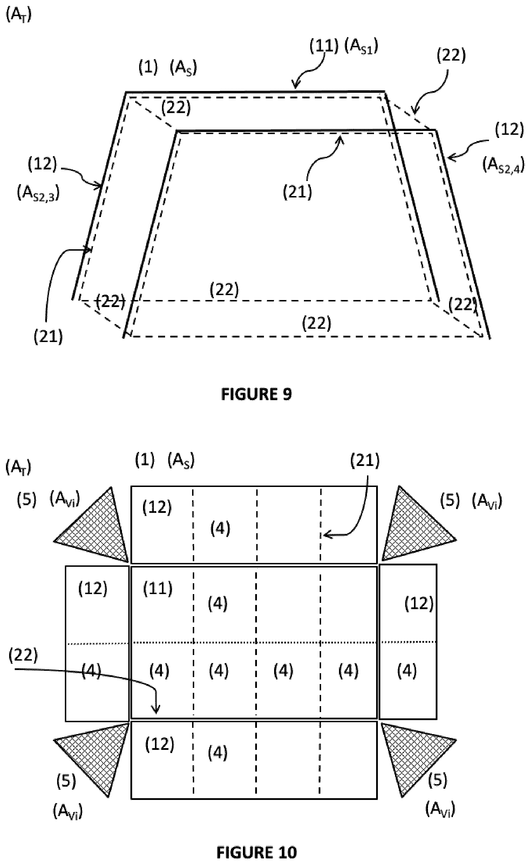

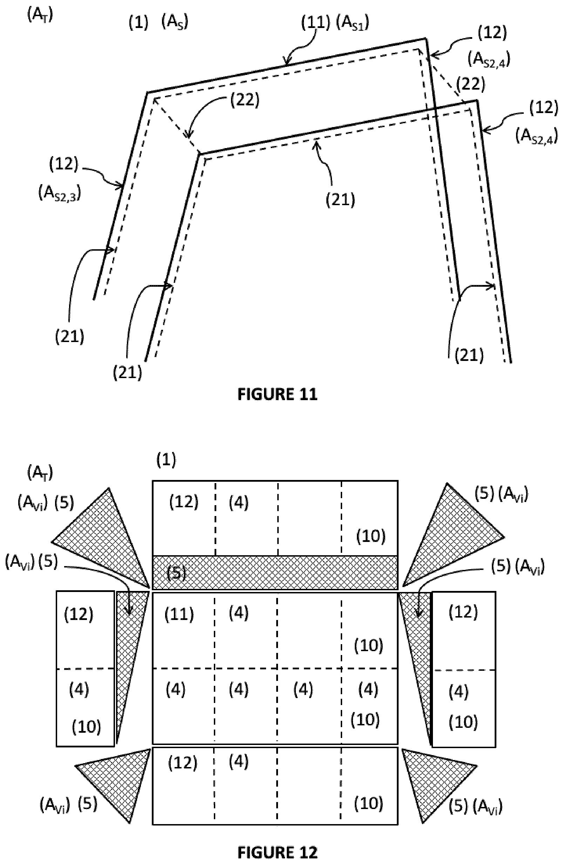

**Figures 9** to **12** represent embodiments of systems whereby the solar envelope (1) include one top portion (11) surrounded by four lateral portions (12) configuring a general shape of type pyramid trunk and presenting solar panels (4) and ventilation parts (5).

In particular, the ventilation parts (5) are disposed between solar panels (4) and so that provide air circulation inwards and outwards of the mostly empty volume confined by the solar envelope (1) and at least along a generally vertical direction through the downwards-oriented opening delimited by the exterior perimeter of the solar envelope (1), and outwards through a region associated with the top portion (11). Moreover, the ventilation parts (5) are disposed so that provide air circulation along at least a transversal direction across the solar envelope (1), preferentially through at least two mutually orthogonal transversal directions in regions associated with lateral portions (12) of the solar envelope (1).

According to one aspect of the invention, it is advantageous when the top and lateral portions (11, 12) present a shape similar to the solar panels (4), preferentially a parallelogram or trapezoid shape.

Moreover, synergistically with the aforementioned aspect, it is also advantageous when the ventilation parts (5) are arranged in at least one of: in regions between the top and lateral portions (11, 12), including in at least part of said regions and/or along at least past of the total extension thereof, and in successive separated regions in the lateral portions (12), including in the form of separated rows at different levels.

The ventilation parts (5) can be provided as empty spaces between rows of solar panels (4) and/or as porous panels, arranged on the solar envelope (1), preferentially in a relative position similar to the solar panels (4), presenting a perforation that provides wind flow to circulate there through, so as to reduce the overall wind load upon the solar envelope (1).

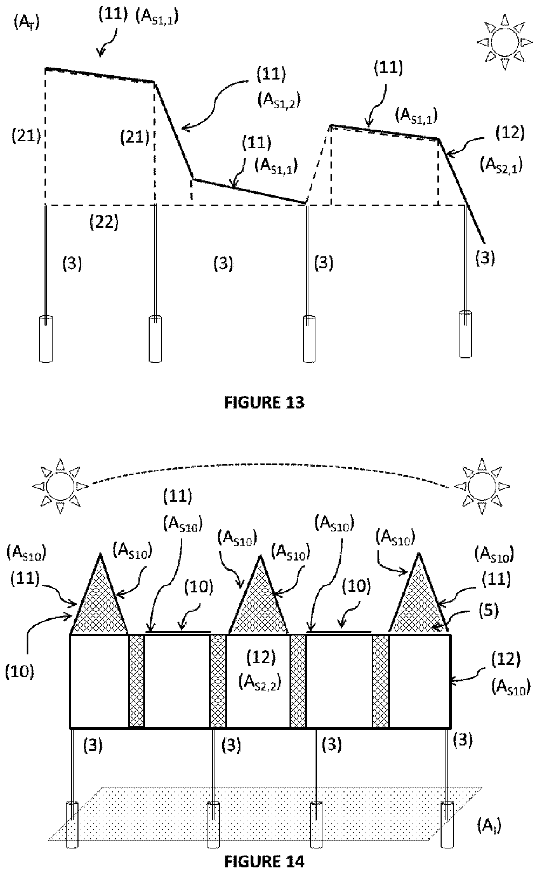

**Figures 13** to **18** represent embodiments whereby the solar envelope (1) and the support structure (2) are configured so that the solar area (A_{S}) on the top portion (11) can be at least equal or bigger than twice the implantation area (A_{I}) and whereby there can be considered the orientation relative to the equator (represented by the sun symbol).

The system represented in **Figure 13** includes a solar envelope (1) that only presents one top portion (11) and one lateral portion (12), whereby the top portion (11) presents two parts separated from each other. One of the parts of the top portion (11) presents a surface that extends in only one plane, whereas the other one of the top portions (11) presents several surfaces arranged in angled planed relative to each other.

**Figure 14** represents an embodiment whereby the top portion (11) presents a plurality of row-like alignments of solar panels (4) corresponding to parcels of the respective solar area (A_{S}) but maintains a horizontal reference plane. Moreover, there are provided lateral portions (12) that extend along the entire extension between two mutually opposing sides of the top portion (11).

According to another aspect of the present invention, the solar panels (4) present a single format, including a format with at least one central symmetry axis, and preferentially also a single dimension, including of at least 1 m², preferentially at least 1,5 m², and whereby intercalary spaces of the solar area (A_{S}) are occupied by ventilation parts (5) configured and distributed so as to reduce the wind loads upon the system.

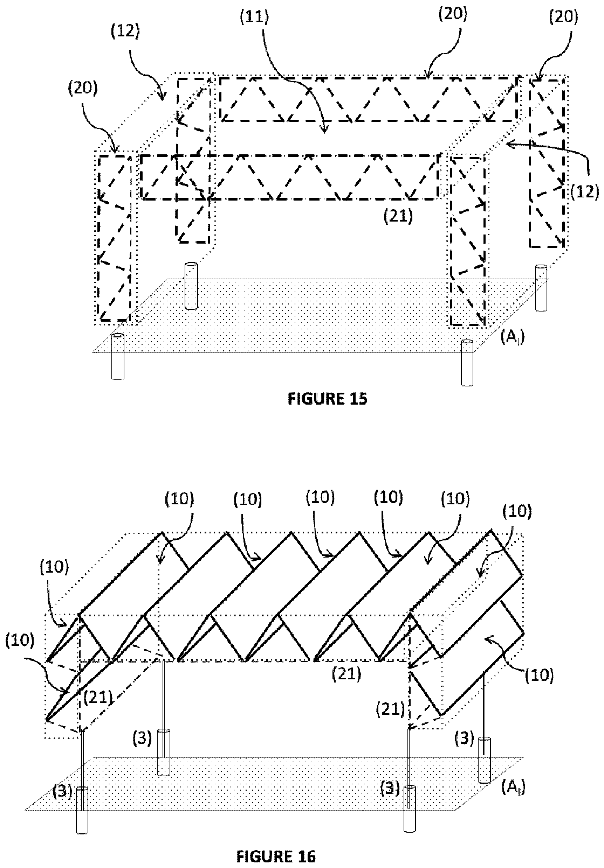

**Figure 15** represents an embodiment of support structure (2) including at least two open convex support alignments in the form of arch or portico, whereby these support alignments are formed by support parts (20) of a generally planar or three-dimensional polygonal shape including a plurality of support elements, for example massive beans, truss beams or tubular beams, united to each other in one or more closed alignments. this configuration reduces the complexity and building effort of the solar energy system.

**Figure 16** represents an embodiment of solar envelope (1) that can be associated with a support structure (2) of the type of the one represented in Figure 15. The top portion (11) in this case includes a plurality of envelope parts (10) of planar trapezoid format, each including a plurality of preferentially adjacent solar panels (4) so that extend along at least most part, preferentially the totality of an extension of the solar envelope (1).

It is further advantageous when the envelope parts (10) present connection parts adapted so that provide fixation to the support structure (2) so that the envelope parts (10) can be installed as an individual piece.

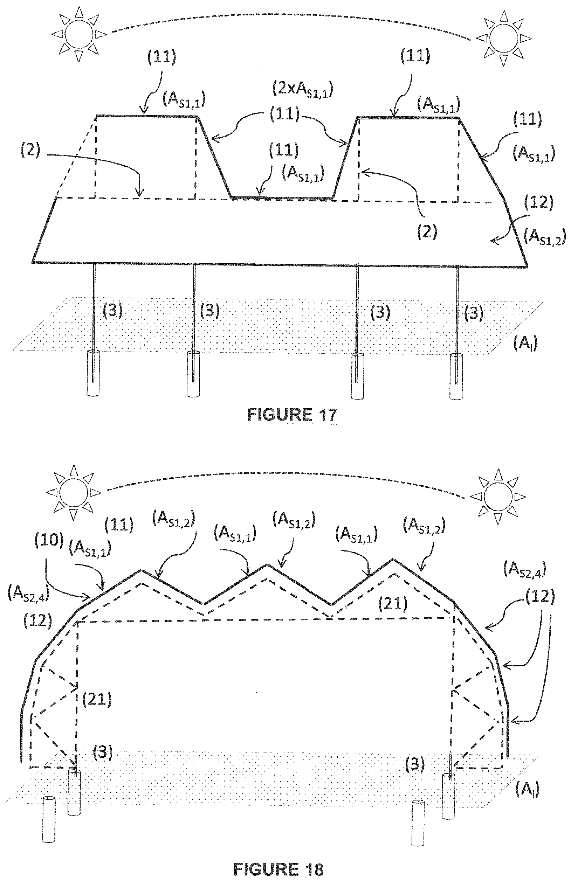

**Figure 17** represents a solar envelope (1) that includes several top portions (11) including in the form of a plurality of projections above a reference plane of the top portion (11) and including envelope parts (10) mostly oriented upwards and disposed at different levels, as well as envelope parts (10) mostly disposed facing laterally.

**Figure 18** represents a preferred embodiment whereby the system presents a general configuration of tunnel type including a top portion (11) with a plurality of envelope parts (10) disposed along two directions mostly oriented upwards or laterally, and at least two lateral parts (12) also including the envelope parts (10) disposed along more than two different spatial directions.

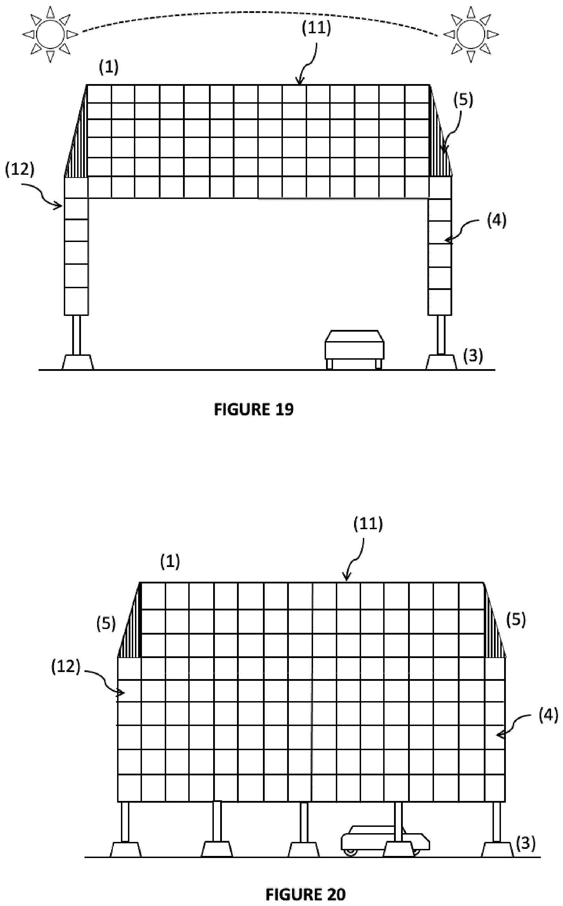

**Figures 19** and **20** represent another embodiment according to the present invention, configured as a tunnel-like construction associated with a traffic way.

## Claims

1. Solar energy system comprising:
- a solar envelope (1) with a total area (A_{T}) delimited by the solar surface of solar panels (4) directed in several directions to the sky dome above and so that define an implantation area (A_{I}) underneath, and
- a support structure (2) associated with the solar envelope (1) and having a structural mesh defined by support alignments (21, 22) disposed so that configure mesh cells in the proximity of the solar envelope (1),
**characterized**
**in that** the system comprises at least one of:
- a solar envelope (1) provided so that presents at least one of: solar panels (4) disposed with an inclination of up to 55° relative to the vertical direction, and a total area (A_{T}) that is at least two times bigger than the implantation area (A_{I}),
- a support structure (2) provided so that presents at least one of: support alignments (21, 22) that configure angles comprised between 75° and 135°, and a total number of mesh cells smaller than the total number of solar panels (4) of the solar envelope (1).

2. System according to claim 1,
**characterized**
**in that** the system comprises at least one of:
- a solar envelope (1) having at least one of: a top portion (11) including solar panels (4) generally oriented upwards, and at least two lateral portions (12) including solar panels (4) generally oriented sideways, whereby it is preferred when at least the total area (A_{T}), preferentially also the direct solar area (A_{S}), is at least two times bigger than the implantation area (A_{I});
- a support structure (2) of type tree-dimensional mesh of convex shape disposed next to the solar envelope (1) and including at least two first support alignments (21) and two second support alignments (22) that provide at least one of: configure at least twelve, preferentially at least sixteen mesh cells, and retain at least twelve, preferentially at least sixteen solar panels(4), whereby it is preferred when the structural mesh presents mesh cells according to at least one of: at least partially overlapping in a vertical projection and completely overlapping in a horizontal projection.

3. System according to claim 1 or 2,
**characterized**
**in that** the system comprises at least one of:
- a solar envelope (1) including solar panels (4) oriented along at least four different directions relative to the sky dome, whereby at least two or at least three of said directions preferentially differ relative to each other by an angle measured by the outside of the solar envelope (1) of at least 200°, preferentially of at least 220°, particularly preferentially of at least 250°,
- a support structure (2) including at least one of: first support alignments (21) that extend generally upwards, and second support alignments (22) that connect the first support alignments (21) along a non-vertical direction, so that jointly configure a convex shape, whereby the distance between at least two successive first support alignments (21) is preferentially different from the distance between at least two successive second support alignments (22) .

4. System according to any of claims 1 to 3,
**characterized**
**in that** the system comprises at least one of:
- a solar envelope (1) including at least one top portion (11) generally oriented upwards and at least two lateral portions (12) that extend along at least most part of at least mutually opposing perimeter segments, preferentially of the entire perimeter of the top portion (11), and angled relative to the top portion (11),
- a support structure (2) including at least four support alignments (21, 22) associated with at least one of: top portion (11) and at least two lateral portions (12), whereby first and second support alignments (21, 22) are preferentially disposed so that intersect each other at at least two different levels above the ground level, and preferentially also at at least two at least approximately equal levels, so as to configure at least five mesh cells.

5. System according to any of claims 1 to 4,
**characterized**
**in that** the solar envelope (1) presents at least one of:
- at least one top portion (11) that presents a first direct solar area (A_{S1}) that is at least 10%, preferentially at least 30%, particularly preferentially at least 50% bigger than the implantation area (A_{I}),
- lateral portions (12) jointly presenting a second direct solar area (A_{S2}) that is at least equal or bigger than the first direct solar area (A_{S1}), preferentially at least two times bigger, particularly preferentially at least three times bigger than the first direct solar area (A_{S1}) ;
- the sum of the orthogonal projections of the four side elevations of direct solar area (A_{S}) is at least equal or bigger than the implantation area (A_{I}), preferentially at least two times bigger than the implantation area (A_{I}),
and/or
**in that** the solar envelope (1) comprises top and lateral portions (11, 12) configured so that jointly define a shape of convex shell that extends in at least mostly continuous manner with a downwards-oriented opening, whereby the shape of the convex shell is preferentially configured according to at least one of:
- with two lateral portions (12) separated from each other by at least one top portion (11), so that configures a shape of arch type,
- with at least three, preferentially at least four lateral portions (12) associated with at least one top portion (11), so that configures a general shape of type parallelepiped, pyramid trunk, or other forms of prisms and/or pyramids;
- with an exterior perimeter of the lateral portions (12) that does not exceed by more than four times, preferentially does not exceed by more than two times, particularly preferentially does not exceed by more than 50% the exterior perimeter of the at least one top portion (11).

6. System according to any of claims 1 to 5,
**characterized**
**in that** the solar envelope (1) comprises a top portion (11) that presents a first direct solar area (A_{S1}) that corresponds to at least one of:
- at least 50% bigger, preferentially at least 70% bigger, particularly preferentially at least two times bigger than the second direct solar area (A_{S2});
- at most 50%, preferentially at most 30%, particularly preferentially at most 25% of the direct solar area (A_{S});
- at least 80%, preferentially at least approximately equal to or bigger than the implantation area (A_{I}), particularly preferentially at least two times bigger than the implantation area (A_{I}),
- includes solar panels (4) disposed according to at least one of: in a plurality of, preferentially at least three, different oblique and/or horizontal directions, and at a plurality of different levels so that the horizontal projection of at least part of the solar panels (4) does not overlap the one of other solar panels (4),
and/or
**in that** the solar envelope (1) comprises a plurality of lateral portions (12), preferentially associated with the top portion (11), and that jointly present at least one of:
- a second direct solar area (A_{S2}) that is bigger, preferentially at least two times bigger, particularly preferentially at least three times bigger than the first direct solar area (A_{S1});
- a second direct solar area (A_{S2}) that is at least approximately equal to, preferentially bigger than the implantation area (A_{I}), particularly preferentially at least two times bigger than the implantation area (A_{I}),
- includes solar panels (4) disposed according to at least one of: in a plurality of, preferentially at least three, different oblique and/or vertical directions, and at a plurality of different oblique and/or vertical directions so that the vertical projection of at least part of the solar panels (4) does not overlap, preferentially at least not entirely, another part of the solar panels (4),
whereby it is preferred when the lateral portions (12) extend, preferentially at least in the proximity and along at least two, preferentially at least the biggest, perimeter extensions of the top portion (11), preferentially along all the perimeter extension of the top portion (11).

7. System according to any of claims 1 to 6,
**characterized**
**in that** the solar envelope (1) only comprises solar panels (4) with at least one common characteristic dimension of solar surface, preferentially with one format common to all the solar panels (4) in the solar envelope (1), so that the solar panels (4) can be disposed in each one of the top and lateral portions (11, 12) according to at least one of:
- in successive alignments of solar panels (4) that extend along a common dimension of solar surface in at least one of: two mutually opposing lateral portions (12) and top portion (11), and along all the lateral portions (12);
- in successive alignments of solar panels (4) distanced from each other by at least one constant distance that corresponds at least approximately to the distance between two support alignments (21, 22) ;
and/or
**in that** the solar envelope (1) is configured so that provides directed air circulation across the solar envelope (1) along at least one of:
- at least two directions, preferentially at least four mutually intersecting directions in a horizontal plane,
- at least three mutually intersecting directions in at least two orthogonal planes, preferentially including an ascending direction.

8. System according to any of claims 1 to 7,
**characterized**
**in that** the solar envelope (1) comprises at least one of: to portion and lateral portions (11, 12) that present at least one of:
- solar panels (4) that correspond to at least 70%, preferentially at least 75% of the total area (A_{T}), and
- ventilation parts (5) adapted so that provide directed air circulation in and out across the solar envelope (1), whereby the ventilation parts (5) are preferentially provided as at least one of: free non-slot spaces and porous panels,
and/or
**in that** the solar envelope (1) comprises at least one of: top portion and lateral portions (11, 12) that present ventilation parts (5) in regions disposed according to at least one of:
- between at least two solar panels (4), preferentially not between all the solar panels (4);
- between alignments of solar panels (4), preferentially only in said regions;
- between top and lateral portions (11, 12);
- between neighbouring lateral portions (12);
- in at least part of the extension of at least part, preferentially the entire extension of the perimeter regions between top and lateral portions (11, 12);
- along at least part, preferentially of an entire transversal extension of at least one of: top portion (11) and lateral portions (12) ;
- along at least part, preferentially of an entire transversal extension between successive alignments of solar panels in at least one of: top portion (11) and lateral portions (12).

9. System according to any of claims 1 to 8,
**characterized**
**in that** the solar envelope (1) further presents an indirect solar area (A_{P}) that corresponds to at least part, preferentially to the entire direct solar area (A_{S}), disposed so that is mostly exposed to indirect solar radiation reflected by the implantation area (A_{I}), whereby it is preferred when at least part of the perimeter of the solar envelope (1) is arranged at a level above the implantation area (A_{I}) that corresponds to at least one of: at least 2 m and at least half the smaller height of the solar envelope (1), and/or whereby it is preferred when at least the most part of the implantation area (A_{I}) presents a light reflexion value (LRV) of at least 40%, preferentially at least 60%.

10. System according to any of previous claims 1 to 9,
**characterized**
**in that** the system comprises a plurality of envelope parts (10) including a plurality of solar panels (4) jointly retained in matrix form, optionally further ventilation parts (5), and adapted so that can be installed as individual piece of the solar envelope (1), whereby the envelope parts (10) are preferentially adapted so that can be installed in at least one of: different positions and different relative inclinations,
and/or
**in that** the system comprises a plurality of structure parts (20) including a plurality of support elements structurally connected in a matrix or mesh form, and adapted so that can be installed as individual piece the support structure (2), whereby the structure parts (20) are preferentially adapted so that can be installed as part of at least one of: first and second support alignments (21, 22) of the support structure (2).

11. System according to any of previous claims 1 to 10,
**characterized**
**in that** the system comprises a plurality of envelope parts (10) presenting a modular format relative to the format of at least one of: total area (A_{T}) and direct solar area (A_{S}) of the solar envelope (1), whereby the system preferentially comprises at most three, preferentially at most two different formats, particularly preferentially a single format of envelope parts (10), and whereby envelope parts (10) preferentially present an extension at least approximately equal to at least one of: one of the characteristic extension of at least one of: top portion (11) and lateral portions (12), and a multiple of said characteristic extension,
and/or
**in that** the system comprises a plurality of structure parts (20) presenting a modular format relative to at least one of first and second support alignments (21, 22), preferentially to both support alignments (21, 22), whereby the system preferentially comprises at most three, preferentially at most two different formats, particularly preferentially a single format of structure parts (20), and whereby at least one of first and second support alignments (21, 22) preferentially includes structure parts (20) along a vertical plane or inclined by up to 45° relative to the vertical direction.

12. System according to any of previous claims 1 to 11,
**characterized**
**in that** the system comprises a plurality of envelope parts (10) including a plurality of solar panels (4) retained together, preferentially at least approximately adjacent, so that configure a matrix or mosaic pattern, for example of trapezoidal format, including planar and/or curved, whereby it is preferred when the envelope parts (10) further including second connection parts adapted for retention according to at least one of: to each other as part of the support structure (2) and to the support structure (2), so that the solar panels (4) of each envelope part (10) can be installed as a single piece,
and/or
**in that** the system comprises a plurality of structure parts (20) including a plurality of support elements retained together, presenting a trapezoidal and/or prismatic format and adapted so that can be disposed in at least approximately orthogonal manner relative to a respective region of the solar envelope (1) and/or direction of the gravity force, whereby it is preferred when the structure parts (20) include connection parts so that the structure parts (20) can be connected to each other so as to configure a plurality of support alignments (21, 22).

13. System according to any of previous claims,
**characterized**
**in that** the system includes at least one of:
- at least one of envelope parts (10) and structure parts (20) configured so that can be produced ex situ for installation as individual pieces in *situ;*
- envelope parts (10) including solar panels (4) functionally connected to each other ex *situ;*
- envelope parts (10) configured so that can be associated to structure parts (20) ex situ for joint installation as individual piece in *situ;*
- structure parts (20) including support elements structurally connected to each other ex situ so that are part of support alignments (21, 22);
- envelope parts (20) comprising a plurality of support elements so that define at least one of: at least most part of one support alignment or part of two support alignments (21, 22), and for installation as individual pieces in *situ;*
- structure parts (20) configured so that can be associated with other structure parts (20) ex situ for joint installation of at least two structure parts (20) in *situ;*
- connection parts for retention of the solar panels (4) to at least one of: to each other and to structure parts (20);
- connection parts for retention of the structure parts (20) to at least one of: to each other and to envelope parts (10).

14. System according to any of previous claims,
**characterized**
**in that** the support structure (2) presents support alignments (21, 22) including at least one of:
- two first support alignments (21) configured convex open, for example with a shape of arch type, disposed successively along a direction transversal to the gravity force, and
- two second support alignments (22) configured convex closed, for example in a shape of ring type, disposed at different levels along the direction of the gravity force,
whereby the second support alignments (22) are provided so that structurally connect the first support alignments (21) retaining these to each other, and preferentially present at least one of different type and different dimension of cross section, preferentially smaller than those of the first support alignments (21),
and/or
**in that** the support structure (2) presents a configuration of tree-dimensional convex mesh including at least one of:
- mesh cells of up to four different formats, preferentially up to three formats, particularly preferentially of a single format;
- mesh cells configured by structural elements presenting at least one of, preferentially at least two of: at least two different values of resistance to deflection, for example corresponding to flexible, semirigid and rigid, different types of construction, for example tubular and truss, different formats of cross section, for example circular, triangular or prismatic, and at least two different values of characteristic dimensions of the cross section, for example width or wall thickness.

15. System according to any of previous claims,
**characterized**
**in that** the support structure (2) presents at least one of:
- at least two first support alignments (21) extending at least approximately equal levels above the ground level, and disposed successively along at least one of the directions transversals to the vertical direction,
- at least two second support alignments (22) disposed successively at different levels;
whereby at least two of said support alignments (21, 22) are connected to each other and preferentially extend along at least most part of the exterior perimeter of the solar envelope (1),
and/or
**in that** the support structure (2) is provided so that can be retained to a support platform (3) by at least four regions of the support structure (2), preferentially distributed at least approximately symmetrically relative to the implantation area (A_{I}), whereby it is preferred when the support platform (3) can be associated with the ground and/or manufactured base, preferentially in an at least approximately symmetrically manner relative to the implantation area (A_{I}), according to at least one of: in at least one location at least partially contained in the implantation area (A_{I}), in several locations that jointly extend along at least half of the perimeter of the implantation area (A_{I}), in several regions that jointly occupy less than 20%, preferentially less than 10% of the implantation area (A_{I}).
